# EUROPEAN PATENT SPECIFICATION

(11) **EP 3 892 487 B1**
(45) Date of publication and mention of the grant of the patent: **26.06.2024**
(21) Application number: 21167677.0
(22) Date of filing: 09.04.2021
(51) Int. Cl.: B60K 20/02, B60K 1/00

(54) **ALL-TERRAIN VEHICLE**
GELÄNDEFAHRZEUG
VEHICULE TOUT TERRAIN

(30) Priority: 10.04.2020 CN 202020532066 U
(43) Date of publication of application: 13.10.2021
(73) Proprietor: Segway Technology Co., Ltd., Jiangsu 213000 (CN)
(72) Inventor: YUAN, Dong, Changzhou, 213000 (CN); CHEN, Mingtang, Changzhou, 213000 (CN)
(74) Representative: De Sandre, Emanuele

(56) References cited:
- WO-A1-2013/006949
- WO-A1-2019/058230
- CN-B- 107 002 834
- US-A1- 2014 367 185
- US-A1- 2016 146 335
- US-A1- 2017 023 127

## Description

### FIELD

The present invention relates to the technical field of all-terrain vehicles, and more particularly, to an all-terrain vehicle.

### BACKGROUND

With the advancement of science and technology and the improvement of living standards, all-terrain vehicle enthusiasts have higher and higher requirements for the performance of all-terrain vehicles.

In the related art, a gearshift steering system of all-terrain vehicles is usually a purely mechanical device. However, the purely mechanical shifting device has the following problems: requiring many parts, taking up a lot of space, often failing to shift gears accurately and smoothly during installation, and being inconvenient to adjust. In addition, the purely mechanical shifting device may also affect the driver's operation on a parking brake of the vehicles.

CN107002834B provides a recreational vehicle, including a power source, such as an engine or an electric motor, and a transmission having a variable gear ratio. A sub-transmission coupled to an output of the transmission includes a plurality of selectable gear configurations including at least one of a forward gear, a neutral gear, a reverse gear, and a park gear. An electronic controller is operative to electronically control the gear configuration of the sub-transmission.

US2016/0146335A1 provides a recreational vehicle, including a power source, such as an engine or an electric motor, and a transmission having a variable gear ratio. A sub-transmission coupled to an output of the transmission includes a plurality of selectable gear configurations including park gear and at least one of a forward gear, a neutral gear and a reverse gear. An electronic controller is operative to electronically control the gear configuration of the sub-transmission in response to a set of conditions.

WO2013/006949A1 provides an off-road vehicle that has four wheels and side-by-side driver and passenger seats. At least two of the wheels are driven by an electric motor powered by batteries disposed in the vehicle.

US2017/0023127A1 is directed to a control system for use with a vehicle having handlebars that are configured to enable vehicle steering. The handlebars define a pair of grasping portions that are disposed to facilitate grasping by a vehicle operator's hands. The vehicle also includes a powertrain and an accessory. The control system includes a manually actuable primary selector disposed adjacent one of the grasping portions to enable manual actuation while one of the vehicle operator's hands grasps the one grasping portion. The primary selector is configured to operate in a powertrain mode to control an aspect of the powertrain, and to operate in a separate accessory mode to control an aspect of the accessory. A manually actuable override selector is disposed adjacent the one grasping portion. The override selector is configured to be manually actuable to switch the primary selector between the powertrain mode and the accessory mode.

WO2019/058230A1 discloses a limited slip differential (LSD) mounted on a driven axle of a vehicle to drive left and right wheels. To control the LSD, a current input torque applied to the LSD is determined and a predicted engine torque is determined based on an accelerator control position. A current average speed of the left and right wheels is also determined. A preload is applied to the LSD. The preload is determined based on the predicted engine torque and to the current average speed of the left and right wheels.

US2014/367185A1 discloses a vehicle having plural modes of operation for the front and rear differential and whereupon start-up of the vehicle, the front and rear differentials are opened to their most open position.

### SUMMARY

The present invention aims to solve at least one technical problem existing in the related art. Accordingly, embodiments of the present invention propose an all-terrain vehicle. The all-terrain vehicle can solve the problem that traditional all-terrain vehicles cannot shift gears stably and smoothly.

The all-terrain vehicle according to the present invention is set out in the appended set of claims.

Thus, for the all-terrain vehicle according to the embodiments of the present invention, the unstable and unsmooth problem associated with traditional purely mechanical shifting devices can be solved by the electronic shifter.

Additional aspects and advantages of the present invention will be given in part in the following descriptions, become apparent in part from the following descriptions, or be learned from the practice of the present invention.

### BRIEF DESCRIPTION OF THE DRAWINGS

The above and/or additional aspects and advantages of the present invention will become apparent and be easily understood from the following description of the embodiments with reference to the accompanying drawings, in which:
FIG. 1 is a schematic view illustrating connection among an electronic shifter, a controller, and a motor;
FIG. 2 is a schematic view illustrating an interior of a cab.
FIG. 3 is a schematic view illustrating an all-terrain vehicle.

Reference numerals:
all-terrain vehicle 100, electronic shifter 1; cable 2; controller 3; CAN bus 4; junction box 5; motor 6; reduction gearbox 7; axle 8; parking brake 9; driver seat 10; passenger seat 11; transmission system 12, dashboard 13, steering wheel 14, cab 15.

### DETAILED DESCRIPTION

Embodiments of the present invention will be described in detail below, and the embodiments described with reference to the drawings are exemplary. The embodiments of the present invention will be described in detail below.

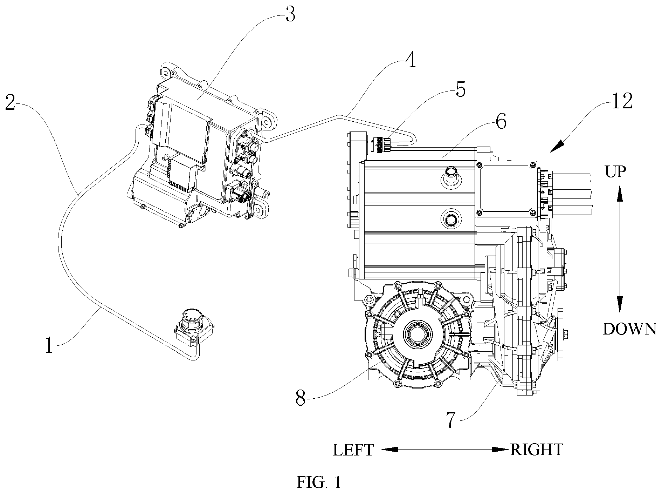

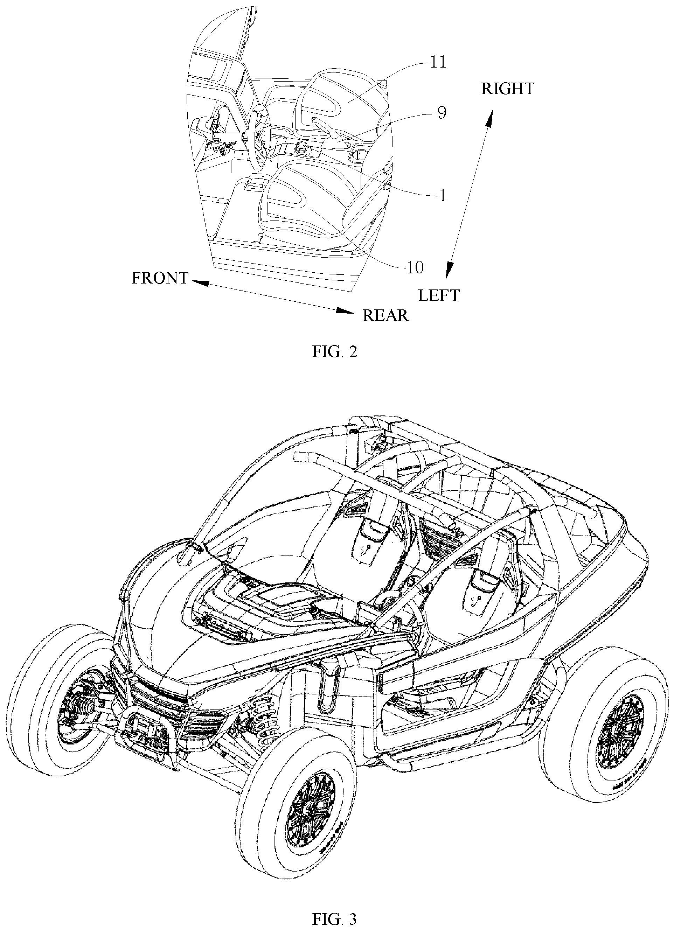

An all-terrain vehicle 100 according to embodiments of the present invention will be described in detail below with reference to FIGS. 1 and 2.

As shown in FIG. 1, the all-terrain vehicle 100 according to the embodiments of the present invention includes: a motor 6, a controller 3, and an electronic shifter 1. The controller 3 is electrically coupled to the motor 6, and the electronic shifter 1 is electrically coupled to the controller 3. The motor 6 provides power for the all-terrain vehicle 100. The controller 3 is coupled between the motor 6 and the electronic shifter 1. After a driver manipulates the electronic shifter 1 and makes a shift action, the electronic shifter 1 can transmit shift information to the controller 3. The controller 3 converts the shift information into a shift instruction after analysis and processing, and sends the shift instruction to the motor 6, so that the motor 6 can be controlled to change output power, which can allow the output power of the motor 6 to conform to the current gear.

The all-terrain vehicle 100 of the present invention adopts the electronic shifter 1, which can effectively replace traditional mechanical shift levers, thus solving the problem of unstable and unsmooth gear shifting in traditional all-terrain vehicles. Moreover, compared with the traditional mechanical shift levers, the electronic shifter 1 occupies less space, thereby avoiding interference with other components during shift operations and further ensuring shifting convenience for drivers.

The all-terrain vehicle 100 may include a dashboard 13 or a steering wheel 14, and the electronic shifter 1 is arranged on the dashboard 13 or the steering wheel 14. However, this example does not belong to the protection scope of the present invention.

As shown in FIG. 2, the all-terrain vehicle 100 according to the embodiments of the present invention further includes a cab 15, in which a driver seat 10 and a passenger seat 11 are arranged, and the electronic shifter 1 is arranged between the driver seat 10 and the passenger seat 11. That is, the cab 15 includes: the passenger seat 11 and the driver seat 10, the passenger seat 11 is arranged on a front side and near a right side of the cab 15, and the driver seat 10 is arranged on the front side and near a left side of the cab 15. The electronic shifter 1 is arranged between the driver seat 10 and the passenger seat 11, such that the electronic shifter 1 is arranged in an intermediate position. As a result, the space left between the driver seat 10 and the passenger seat 11 can be reasonably used, operations of the driver can be facilitated, and the electronic shifter 1 can be prevented from interfering with the steering wheel 14 and affecting operations of the driver.

Specifically, as shown in FIG. 2, a parking brake 9 is also arranged in the cab 15. The parking brake 9 is located between the driver seat 10 and the passenger seat 11 and spaced apart from the electronic shifter 1, which can further make it convenient for the driver to manipulate the parking brake 9. Moreover, since the parking brake is spaced apart from the electronic shifter, mutual interference can be avoided to a certain extent, thereby ensuring the driving safety of the driver.

Further, as shown in FIG. 2, compared with the position of the parking brake 9, the electronic shifter 1 is closer to the driver seat 10, and the parking brake 9 is located on a rear side of the electronic shifter 1. This arrangement can facilitate operations of the driver, further prevent the electronic shifter 1 and the parking brake 9 from interfering with each other, and avoid safety hazards caused by operation errors, thereby further improving the driving safety of the all-terrain vehicle 100.

According to a specific embodiment of the present invention, as shown in FIG. 1, the motor 6 includes a junction box 5. The controller 3 is electrically coupled to the junction box 5 through a CAN bus 4, and the junction box 5 is coupled to the motor 6. The arrangement of the junction box 5 can facilitate wiring, and the CAN bus 4 allows simple connection and stable transmission, which can make the shift operations more reliable.

As shown in FIG. 1, the all-terrain vehicle 100 also includes a transmission system 12. The transmission system 12 includes: a reduction gearbox 7 and an axle 8. The axle 8 may be a rear axle, and the motor 6 is arranged above the axle 8 and the reduction gearbox 7. The reduction gearbox 7 is arranged on a side of the axle 8. A motor shaft of the motor 6 is in transmission with an input shaft of the reduction gearbox 7, and an output shaft of the reduction gearbox 7 is in transmission with the axle 8. The motor 6 is coupled to the controller 3 through the CAN bus 4, and the controller 3 is coupled to the electronic shifter 1. The driver transmits a shift signal to the controller 3 by operating the electronic shifter 1, and the controller 3 in turn processes the shift signal and transmits it to the motor 6, to change a rotation speed of the motor shaft of the motor 6. The motor shaft is in transmission with the input shaft of the reduction gearbox 7, then a rotation speed of the output shaft of the reduction gearbox 7 is changed through the reduction gearbox 7, and the output shaft of the reduction gearbox 7 is in transmission with the axle 8. As a result, the gears can be shifted.

Optionally, as shown in FIGS. 1 and 2, the electronic shifter 1 includes a shift knob which is used to adjust the gears more conveniently, quickly, accurately and comfortably. A top surface of the shift knob can be provided with gear letters corresponding to respective gears, such that it can be more convenient for the driver to identify and operate. For example, the word "R" on the shift knob represents a reverse gear.

Further, the shift knob is provided with an anti-slip stripe or an anti-slip surface on its periphery. The arrangement of the anti-slip stripe or anti-slip surface can avoid slipping when the driver manipulates the shift knob, and can further ensure that the driver performs shift operations accurately.

Optionally, the electronic shifter 1 includes a paddle shifter. That is, the all-terrain vehicle 100 can also implement shift operations in the form of paddle shifter Moreover, the paddle shifter can make the driver's shift operation stable, convenient and fast. However, this example does not belong to the protection scope of the present invention.

Optionally, as shown in FIG. 1, a low-voltage cable 2 is coupled between the electronic shifter 1 and the controller 3. The low-voltage cable 2 can effectively connect the electronic shifter 1 and the controller 3, and it can stably transmit the shift information of the electronic shifter 1 to the controller 3. Moreover, the low-voltage cable 2 has a reliable structure and low cost.

Reference throughout this specification to "an embodiment," "some embodiments," "an exemplary embodiment", "an example," "a specific example," or "some examples," means that a particular feature, structure, material, or characteristic described in connection with the embodiment or example is included in at least one embodiment or example of the present invention. Thus, the above terms throughout this specification are not necessarily referring to the same embodiment or example of the present invention.

Although embodiments of the present invention have been shown and described, it would be appreciated by those skilled in the art that various changes, modifications, alternatives and variations may be made in the embodiments without departing from the scope of the present invention as defined by the claims.

## Claims

1. An all-terrain vehicle (100), comprising:
a motor (6);
a controller (3) electrically coupled to the motor (6);
a cab (15), a driver seat (10) and a passenger seat (11) being arranged in the cab (15);
an electronic shifter (1) electrically coupled to the controller (3) and arranged between the driver seat (10) and the passenger seat (11); and
a parking brake (9) arranged in the cab (15),
**characterized in that** the parking brake (9) is also arranged between the driver seat (10) and the passenger seat (11) and spaced apart from the electronic shifter (1); and
the electronic shifter (1) is closer to the driver seat (10) than the parking brake (9), and the parking brake (9) is located on a rear side of the electronic shifter (1).

2. The all-terrain vehicle (100) according to claim 1, wherein the motor (6) comprises a junction box (5), and the controller (3) is electrically coupled to the junction box (5) through a CAN bus (4).

3. The all-terrain vehicle (100) according to any one of claims 1 to 2, further comprising a transmission system (12), wherein the transmission system (12) comprises a reduction gearbox (7) and an axle (8), the motor (6) is arranged above the axle (8), the reduction gearbox (7) is arranged on a side of the axle (8), a motor shaft of the motor (6) is in transmission with an input shaft of the reduction gearbox (7), and an output shaft of the reduction gearbox (7) is in transmission with the axle (8).

4. The all-terrain vehicle (100) according to any one of claims 1 to 3, wherein the electronic shifter (1) comprises a shift knob.

5. The all-terrain vehicle (100) according to claim 4, wherein the shift knob is provided with an anti-slip stripe or an anti-slip surface on a periphery of the shift knob.

6. The all-terrain vehicle (100) according to any one of claims 1 to 5, wherein a low-voltage cable (2) is coupled between the electronic shifter (1) and the controller (3).

7. The all-terrain vehicle (100) according to any one of claims 1 to 6, wherein the controller (3) is configured to transmit shift information of the electronic shifter (1) to the motor (6) of the all-terrain vehicle.

8. The all-terrain vehicle (100) according to any one of claims 1 to 7, wherein the controller (3) is coupled between the motor (6) and the electronic shifter (1).

9. The all-terrain vehicle (100) according to any one of claims 1 to 8, wherein the passenger seat (11) is arranged on a front side and near a right side of the cab (15), and the driver seat (10) is arranged on the front side and near a left side of the cab (15).

## Patentansprüche

1. Geländefahrzeug (100), umfassend:
einen Motor (6);
einen Controller (3), der mit dem Motor (6) elektrisch gekoppelt ist;
eine Kabine (15), einen Fahrersitz (10) und einen Beifahrersitz (11), die in der Kabine (15) angeordnet sind;
ein elektronische Gangschaltung (1), die mit dem Controller (3) elektrisch gekoppelt und zwischen dem Fahrersitz (10) und dem Beifahrersitz (11) angeordnet ist; und
eine Feststellbremse (9), die in der Kabine (15) angeordnet ist,
**dadurch gekennzeichnet, dass** die Feststellbremse (9) ebenso zwischen dem Fahrersitz (10) und dem Beifahrersitz (11) angeordnet und von der elektronischen Gangschaltung (1) beabstandet ist; und
die elektronische Gangschaltung (1) näher an dem Fahrersitz (10) als die Feststellbremse (9) ist und die Feststellbremse (9) sich auf einer Rückseite der elektronischen Gangschaltung (1) befindet.

2. Geländefahrzeug (100) nach Anspruch 1, wobei der Motor (6) eine Anschlussdose (5) umfasst und der Controller (3) über einen CAN-Bus (4) mit der Anschlussdose (5) elektrisch gekoppelt ist.

3. Geländefahrzeug (100) nach einem der Ansprüche 1 bis 2, ferner umfassend ein Getriebesystem (12), wobei das Getriebesystem (12) ein Vorgelege (7) und eine Achse (8) umfasst, der Motor (6) über der Achse (8) angeordnet ist, das Vorgelege (7) auf einer Seite der Achse (8) angeordnet ist, eine Motorwelle des Motors (6) mit einer Eingangswelle des Vorgeleges (7) in Getriebeverbindung steht und eine Ausgangswelle des Vorgeleges (7) mit der Achse (8) in Getriebeverbindung steht.

4. Geländefahrzeug (100) nach einem der Ansprüche 1 bis 3, wobei die elektronische Gangschaltung (1) einen Schaltknauf umfasst.

5. Geländefahrzeug (100) nach Anspruch 4, wobei der Schaltknauf mit einem Anti-Rutsch-Streifen oder einer Anti-Rutsch-Oberfläche an einem Umfang des Schaltknaufs versehen ist.

6. Geländefahrzeug (100) nach einem der Ansprüche 1 bis 5, wobei ein Niederspannungskabel (2) zwischen der elektronischen Gangschaltung (1) und dem Controller (3) gekoppelt ist.

7. Geländefahrzeug (100) nach einem der Ansprüche 1 bis 6, wobei der Controller (3) konfiguriert ist, um Schaltinformationen der elektronischen Gangschaltung (1) an den Motor (6) des Geländefahrzeugs zu übertragen.

8. Geländefahrzeug (100) nach einem der Ansprüche 1 bis 7, wobei der Controller (3) zwischen dem Motor (6) und der elektronischen Gangschaltung (1) gekoppelt ist.

9. Geländefahrzeug (100) nach einem der Ansprüche 1 bis 8, wobei der Beifahrersitz (11) an einer Vorderseite und nahe einer rechten Seite der Kabine (15) angeordnet ist, und der Fahrersitz (10) auf der Vorderseite und nahe einer linken Seite der Kabine (15) angeordnet ist.

## Revendications

1. Véhicule tout-terrain (100), comprenant :
un moteur (6) ;
un dispositif de commande (3) couplé électriquement au moteur (6) ;
une cabine (15), un siège conducteur (10) et un siège passager (11) étant agencés dans la cabine (15) ;
un levier de vitesse électronique (1) couplé électriquement au dispositif de commande (3) et agencé entre le siège du conducteur (10) et le siège du passager (11) ; et
un frein de stationnement (9) agencé dans la cabine (15),
**caractérisé en ce que** le frein de stationnement (9) est également agencé entre le siège du conducteur (10) et le siège du passager (11) et à distance du levier de vitesses électronique (1) ; et
le levier de vitesse électronique (1) est plus proche du siège du conducteur (10) que le frein de stationnement (9), et le frein de stationnement (9) est situé à l'arrière du levier de vitesse électronique (1).

2. Véhicule tout-terrain (100) selon la revendication 1, dans lequel le moteur (6) comprend une boîte de jonction (5), et le dispositif de commande (3) est couplé électriquement à la boîte de jonction (5) par l'intermédiaire d'un bus CAN (4).

3. Véhicule tout-terrain (100) selon l'une des revendications 1 à 2, comprend en outre un système de transmission (12), dans lequel le système de transmission (12) comprend une boîte de vitesses de réduction (7) et un essieu (8), le moteur (6) est agencé au-dessus de l'essieu (8), la boîte de vitesses de réduction (7) est agencée sur un côté de l'essieu (8), un arbre moteur du moteur (6) est en transmission avec un arbre d'entrée de la boîte de vitesses de réduction (7), et un arbre de sortie de la boîte de vitesses de réduction (7) est en transmission avec l'essieu (8).

4. Véhicule tout-terrain (100) selon l'une des revendications 1 à 3, dans lequel le levier de vitesses électronique (1) comprend un pommeau de levier de vitesses.

5. Véhicule tout-terrain (100) selon la revendication 4, dans lequel le pommeau de levier de vitesse est pourvu d'une bande antidérapante ou d'une surface antidérapante sur une périphérie du pommeau de levier de vitesse.

6. Véhicule tout-terrain (100) selon l'une des revendications 1 à 5, dans lequel un câble basse tension (2) est couplé entre le levier de vitesses électronique (1) et le dispositif de commande (3).

7. Véhicule tout-terrain (100) selon l'une des revendications 1 à 6, dans lequel le dispositif de commande (3) est configuré pour transmettre les informations de changement de vitesse du levier de vitesses électronique (1) au moteur (6) du véhicule tout-terrain.

8. Véhicule tout-terrain (100) selon l'une des revendications 1 à 7, dans lequel le dispositif de commande (3) est couplé entre le moteur (6) et le levier de vitesses électronique (1).

9. Véhicule tout-terrain (100) selon l'une des revendications 1 à 8, dans lequel le siège passager (11) est agencé sur un côté avant et près d'un côté droit de la cabine (15), et le siège conducteur (10) est agencé sur le côté avant et près d'un côté gauche de la cabine (15).
